# FASCICULE DE BREVET EUROPEEN

(11) **EP 0 721 873 B1**
(45) Date de publication et mention de la délivrance du brevet: **27.05.1998**
(21) Numéro de dépôt: 96400020.2
(22) Date de dépôt: 04.01.1996
(51) Int. Cl.: B62D 1/16, B60R 25/02

(54) **Corps de colonne de direction notamment de véhicule automobile et ensemble de colonne de direction comportant un tel corps**
Lenksäulenkörper insbesondere für ein Kraftfahrzeug und Lenksäuleneinheit mit einem solchen Körper
Steering column body especially for automotive vehicle and steering column assembly comprising such a body

(30) Priorité: 12.01.1995 FR 9500320
(43) Date de publication de la demande: 17.07.1996
(73) Titulaire: ECIA - EQUIPEMENTS ET COMPOSANTS POUR L'INDUSTRIE AUTOMOBILE, F-25400 Audincourt (FR)
(72) Inventeur: Amella, Rosario, F-25150 Bourguignon (FR); Courvoisier, Patrick, F-25600 Vieux-Charmont (FR); Salez, Jean-Philippe, F-25700 Valentigney (FR)
(74) Mandataire: Habasque, Etienne Joel Jean-François

(56) Documents cités:
- EP-A- 0 365 423
- EP-A- 0 502 761
- FR-A- 1 418 109
- FR-A- 1 451 316

## Description

La présente invention concerne un corps de colonne de direction notamment de véhicule automobile et un ensemble de colonne de direction comportant un tel corps.

On connait déjà dans l'état de la technique, un certain nombre de corps de colonne de direction notamment pour véhicule automobile, qui comportent une lumière de passage d'un pène d'un mécanisme de verrouillage fixé sur le corps.

Ce pène est adapté pour traverser cette lumière du corps et pour coopérer avec des moyens d'immobilisation complémentaires par exemple d'un manchon antivol fixé sur un arbre de direction monté rotatif à l'intérieur du corps, pour assurer un verrouillage de celui-ci et donc de l'ensemble de colonne de direction en position.

Dans l'état de la technique, on interpose généralement entre le corps de colonne et le manchon antivol, une pièce de structure rigide, fixée sur le corps et comportant une lumière en regard de la lumière du corps, pour le passage du pène, cette pièce de structure rigide permettant de renforcer le corps au niveau de la lumière de celui-ci, pour lui permettre de supporter les couples appliqués sur l'arbre de direction et le reste de l'ensemble de colonne lors par exemple d'une tentative de vol du véhicule.

On conçoit cependant que ceci présente un certain nombre d'inconvénients, car il est nécessaire de prévoir une pièce supplémentaire entre le corps de colonne et le manchon antivol, ce qui augmente le poids de l'ensemble de colonne correspondant, sa difficulté de réalisation et son coût de fabrication.

Le but de l'invention est donc de résoudre ces problèmes.

A cet effet, l'invention a pour objet un corps de colonne de direction notamment de véhicule automobile, du type comportant une lumière de passage d'un pène d'un mécanisme de verrouillage fixé sur le corps, caractérisé en ce que les bords du corps délimitant la lumière et s'étendant dans la direction axiale comprennent des portions repliées à peu près radialement pour renforcer ce corps au niveau de cette lumière sans nécessiter la fixation d'une pièce supplémentaire sur ledit corps.

Selon un autre aspect, l'invention a également pour objet un ensemble de colonne de direction comportant un tel corps.

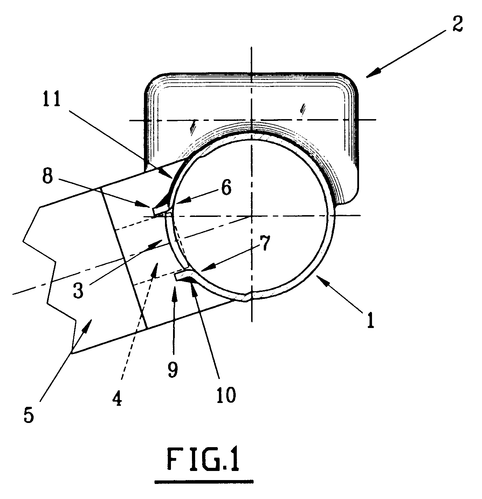

L'invention sera mieux comprise à la lecture de la description qui va suivre, donnée uniquement à titre d'exemple et faite en se référant au dessin annexé, qui représente une vue en coupe d'un corps de colonne de direction selon l'invention, prise au niveau de la lumière de celui-ci.

On reconnait sur cette figure, un corps de colonne de direction désigné par la référence générale 1 adapté pour recevoir un arbre de direction et entrant dans la constitution d'un ensemble de colonne de direction notamment de véhicule automobile.

Ce corps est par exemple relié à des moyens de montage 2 permettant la fixation de ce corps à l'intérieur d'une structure de fixation de ce corps sur le reste de la structure du véhicule.

Ce corps comporte également une lumière désignée par la référence générale 3 sur ces figures, de passage d'un pène illustré en traits pointillés sur cette figure et désigné par la référence générale 4, d'un mécanisme de verrouillage 5 fixé sur le corps.

Ce mécanisme de verrouillage est par exemple un mécanisme de verrouillage à clé de type classique, permettant d'actionner le pène 4 adapté pour coopérer avec un manchon antivol relié à l'arbre de direction pour immobiliser celui-ci à l'intérieur du corps, afin de bloquer la colonne de direction.

Ainsi qu'on l'a indiqué précédemment, dans l'état de la technique, on interpose entre le corps et le manchon antivol, une pièce de structure pour rigidifier le corps au niveau de cette lumière.

Selon l'invention, les bords axiaux du corps 1 délimitant la lumière 3, c'est à dire les bords désignés par les références 6 et 7 sur cette figure, comprennent des portions repliées à peu près radialement désignées par les références 8 et 9.

Dans l'exemple de réalisation décrit, ces portions sont repliées radialement vers l'extérieur du corps et permettent d'une part de former des surfaces de guidage du pêne ou d'une autre pièce correspondante des moyens de verrouillage, et d'autre part, de renforcer ce corps au niveau de cette lumière.

On notera également que des moyens de renfort peuvent être prévus entre le reste du corps et les portions repliées des bords du corps délimitant la lumière de celui-ci.

C'est ainsi par exemple que ces moyens de renfort peuvent être formés par des bossages radiaux, par exemple 10, formés dans la zone de liaison du corps et des portions repliées des bords de la lumière.

On notera également, comme cela est illustré sur cette figure, que le corps peut comporter une portion 11 élargie par rapport au reste de celui-ci pour permettre l'adaptation d'un mécanisme antivol classique de n'importe quel type sur ce corps.

Cette portion est par exemple réalisée par emboutissage lors de la fabrication de ce corps.

Il va de soi bien entendu que différents modes de réalisation des portions repliées des bords de la lumière du corps peuvent être envisagés.

Le corps peut par exemple être réalisé à partir d'un flan de tôle par emboutissage puis roulage et sertissage ou soudage de celui-ci pour obtenir le corps représenté sur la figure.

## Revendications

1. Corps de colonne de direction notamment de véhicule automobile, du type comportant une lumière (3) de passage d'un pène (4) d'un mécanisme de verrouillage (5) fixé sur le corps (1), caractérisé en ce que les bords (6,7) du corps délimitant la lumière et s'étendant dans la direction axiale comprennent des portions repliées à peu près radialement (8,9), pour renforcer ce corps au niveau de cette lumière sans nécessiter la fixation d'une pièce supplémentaire sur ledit corps.

2. Corps selon la revendication 1, caractérisé en ce que des moyens de renfort (10) sont prévus entre le reste du corps et les portions repliées (8,9) des bords de la lumière (3).

3. Corps selon la revendication 2, caractérisé en ce que ces moyens de renfort sont formés par des bossages (10).

4. Ensemble de colonne de direction notamment de véhicule automobile, caractérisé en ce qu'il comporte un corps de colonne selon l'une quelconque des revendications précédentes.

## Claims

1. Steering column body, notably for a motor vehicle, of the type comprising an opening (3) for the passage of a bolt (4) of a locking mechanism (5) fixed to the body (1), characterised in that the edges (6, 7) of the body defining the opening and extending in the axial direction comprise portions (8, 9) which are bent substantially radially, for reinforcing this body in the area of this opening, without the need to attach an additional component to said body.

2. Body according to claim 1, characterised in that reinforcing means (10) are provided between the remainder of the body and the bent portions (8,9) of the edges of the opening (3).

3. Body according to claim 2, characterised in that these reinforcing means are formed by bosses (10).

4. Steering column assembly, especially for a motor vehicle, characterised in that it comprises a column body according to any of the preceding claims.

## Patentansprüche

1. Lenksäulenkörper insbesondere für ein Kraftfahrzeug, bestehend aus einer Öffnung (3) für den Durchgang eines Riegels (4) eines Verriegelungsmechanismus (5), der auf dem Körper (1) befestigt ist, dadurch gekennzeichnet, daß die Ränder (6, 7) des Körpers, die die Öffnung begrenzen und sich in Axialrichtung erstrecken, ungefähr radial umgebogene Abschnitte (8, 9) umfassen, um diesen Körper im Bereich dieser Öffnung zu verstärken, ohne daß die Befestigung eines zusätzlichen Teils auf dem Körper erforderlich wäre.

2. Körper nach Anspruch 1, dadurch gekennzeichnet, daß Verstärkungsmittel (10) zwischen dem übrigen Körper und den umgebogenen Abschnitten (8, 9) der Ränder der Öffnung (3) vorgesehen sind.

3. Körper nach Anspruch 2, dadurch gekennzeichnet, daß diese Verstärkungsmittel von Buckeln (10) gebildet werden.

4. Lenksäuleneinheit insbesondere für ein Kraftfahrzeug, dadurch gekennzeichnet, daß sie einen Lenksäulenkörper nach einem der vorhergehenden Ansprüche umfaßt.
